# EUROPEAN PATENT SPECIFICATION

(11) **EP 2 202 944 B1**
(45) Date of publication and mention of the grant of the patent: **30.11.2011**
(21) Application number: 09178150.0
(22) Date of filing: 07.12.2009
(51) Int. Cl.: H04L 29/08, H04L 29/06

(54) **Method for generating multimedia files intended to be transmitted by packets in a peer-to-peer network**
Verfahren zur Erzeugung von Multimediadateien zur Paketübertragung in einem Peer-to-Peer-Netzwerk
Procédé de génération de fichiers multimédia destinés a être trasmis par paquets dans un réseau pair-a-pair

(30) Priority: 29.12.2008 FR 0859104
(43) Date of publication of application: 30.06.2010
(73) Proprietor: Thomson Licensing, 92130 Issy-les-Moulineaux (FR)
(72) Inventor: Gerard, Francois, 92100, Boulogne Billancourt (FR); Legallais, Yvon, 92100, Boulogne Billancourt (FR); Laurent, Anthony, 92100, Boulogne Billancourt (FR)
(74) Representative: Ruellan-Lemonnier, Brigitte

(56) References cited:
- WO-A-03/058897
- WO-A-2006/053949
- US-A1- 2002 073 084
- YORAM KULBAK, DANNY BICKSON: "The eMule Protocol Specification"[Online] 17 January 2005 (2005-01-17), pages 1-66, XP007909614 Jerusalem, Israel Retrieved from the Internet: URL:http://www.cs.huji.ac.il/labs/danss/p2 p/resources/emule.pdf> [retrieved on 2009-08-28]

## Description

The present invention relates to a method for generating multimedia files intended to be transmitted by packets in a peer-to-peer network

It is known in the art to use the Internet network to access to multimedia contents, particularly to view video contents that can be accessed in VoD (Video On Demand).

Document US 2002/0 073 084 A1 discloses the insertion of advertising in a multimedia File.

According to a broadcast mode, these video contents can be transmitted by downloading, in which case it is necessary to recover the file set coding this video content prior to its restitution.

The implementation of a broadcast via a peer-to-peer network can then facilitate this recovery.

In fact, a peer-to-peer network is formed by a plurality of servers that can transmit and receive files such that each server of the network, having received a file, can retransmit it to the other network servers. Thereafter, such a server is referred to as a peer.

In order to provide the files to broadcast to the peer-to-peer network, an operator can prepare the latter using a server referred to as the "seed server" or "Content Preparation Server".

Such an operator server defines a first zone of the peer-to-peer network with regard to a second zone formed by the peers that, as indicated, can fulfil the functions of clients and of servers.

In order to respond to a content purchase request, the operator server transmits a purchase ticket transmitted with two lists described below:
- A list of packets, also referred to as chunks, forming the multimedia file and used to distribute the file coding this content in the peer-to-peer network. This list is referred to as the content map.
- A list of servers, comprising at least one operator server and the peers, through which this file can be totally - all of its packets - or partially - some packets - recovered. This list is referred to as the peer list.

It appears that the operation of a peer-to-peer network is particularly effective, notably in terms of rapidity and response reliability, when a same file is distributed repeatedly.

Indeed, in this case, the packets that have already been distributed once, via the peers, can be used via the same peers to respond to any new request.

However, video content providers may want to customize the contents delivered in these-networks according to determined profiles in order to customize and/or adapt their content offer. For example, different publicity messages can alternatively be inserted in a film transmitted by a peer-to-peer network according to the geographical location of the peer requiring the downloading of this film.

For example, other criteria can be cited to customize/adapt a content offer such as, without being exhaustive, a subscription category, an applicant socio-professional category, a history of requests and/or purchases previously made, preferences declared by the applicant in a questionnaire.

In this case, the specificity of each multimedia file thus generated leads to a plurality of distinct multimedia contents and, consequently, multiplies the quantity of files, and derived packets, needing to be processed by a peer-to-peer network.

The present invention aims to overcome this disadvantage. It results from the recognition that the transmission, in a peer-to-peer network, of two files having a difference, even relatively minor, in contents may require totally distinct packets for each of these files.

In fact, the packets implemented in a peer-to-peer network generally have a constant size such that, for example, a data insertion in a file offsets the set of data of this file downstream of the insertion with respect to the reading direction of this file.

For this reason, the present invention relates to a method for generating multimedia files intended to be transmitted via a peer-to-peer network by transmission packets of the same size, each of these multimedia files being obtained from an intermediary file comprising:
- a content common to the intermediary files, formed by primary data, and
- a content specific to each intermediary file, formed by secondary data introduced in an insertion zone delimited by primary data,
characterized in that these multimedia files are generated by introducing filling data in the insertion zones of intermediary files such that a limit of these insertion zones corresponds to a limit between two distinct transmission packets.

By means of a method in accordance with the invention, it is possible to increase the quantity of packets common to more than one multimedia files transmitted via a peer-to-peer network.

In fact, the filling data are used to compensate the offset, due to the insertion of data as previously described, between the packets transporting multimedia data that differ as a result of an insertion of distinct data.

Thus, the transmission of data present in the insertion zones (secondary data or filling data) can be carried out by means of dedicated packets such that the transmission of common content, situated outside of this limit, can be carried out from the same common packets.

In an embodiment, filling data are introduced between the secondary data and the insertion zones limit corresponding to a limit between two distinct packets.

According to an embodiment, the filling data are introduced according to parameters common to the intermediary files.

For example, the parameters common to the intermediary files can comprise at least one of the following parameters: the location of insertion zones in a common file, a predetermined size of packets to be transmitted, the sizes of intermediary files, a location rule for filling data in a packet.

Thus, such a location rule for filling data in a packet may require the location of these filling data at the start or the end of a packet.

In this case, the information indicating the quantity of filling data, situated at the start or end of a packet, can be associated with this packet in the packets list or content map.

In an embodiment, a contents list is associated with a first generated multimedia file identifying at least a second multimedia file having common packets with this first multimedia file.

The invention also relates to an operator server generating multimedia files intended to be transmitted by transmission packets in a peer-to-peer network, each of these multimedia files being obtained from an intermediary file comprising:
- a common content formed by primary data,
- a specific content formed by secondary data introduced in an insertion zone situated between the primary data of common content,
characterized in that comprises means for generating these multimedia files by introducing filling data in the insertion zones of intermediary files such that a limit of these insertion zones corresponds to a limit between two distinct transmission packets in accordance with one of the preceding embodiments.

In an embodiment, the operator server comprises:
- means for receiving a request for transmission of common content, and
- means for transmitting a list of packets and a list of servers of a generated multimedia file, this multimedia file being selected according to parameters specific to the request from this client server.

The invention also relates to a peer intended to receive and transmit multimedia files in a peer-to-peer network, each of these multimedia files being obtained from an intermediary file comprising:
- a common content formed by primary data,
- a specific content formed by secondary data introduced in an insertion zone situated between the primary data of common content,
   characterized in that it comprises means for detecting filling data inserted between the data of a multimedia file according to a method in accordance with one of the preceding embodiments, and
- means for deleting these filling data in order to reproduce the multimedia content of the file without considering the filling data.

According to an embodiment, the peer comprises means for reinserting the deleted filling data before transmitting the multimedia file to another peer.

The invention also relates to multimedia files intended to be transmitted by packets in a peer-to-peer network, each of these multimedia files being obtained from an intermediary file comprising:
- a common content formed by primary data,
- a specific content formed by secondary data introduced in an insertion zone situated between the primary data of common content,
characterized in that they comprise filling data in their insertion zones such that a limit of these insertion zones corresponds to a limit between two distinct transmission packets in accordance with one of the preceding embodiments.

### Brief description of the figures

Other characteristics and advantages of the invention will clearly emerge from the description provided below as a non-restrictive example, with reference to the different annexed figures that show:
- in figure 1, intermediary files formed by a common content and contents specifically inserted previous to the implementation of the invention,
- in figure 2, packets, common or specific to different multimedia files, generated from intermediary files of figure 1 in accordance with the invention, and
- in figure 3, multimedia files formed by the packets of figure 1 in accordance with the invention.

### Description of preferred embodiments of the invention

The elements having a same function, appearing on different figures, conserve unless otherwise specified, the same references.

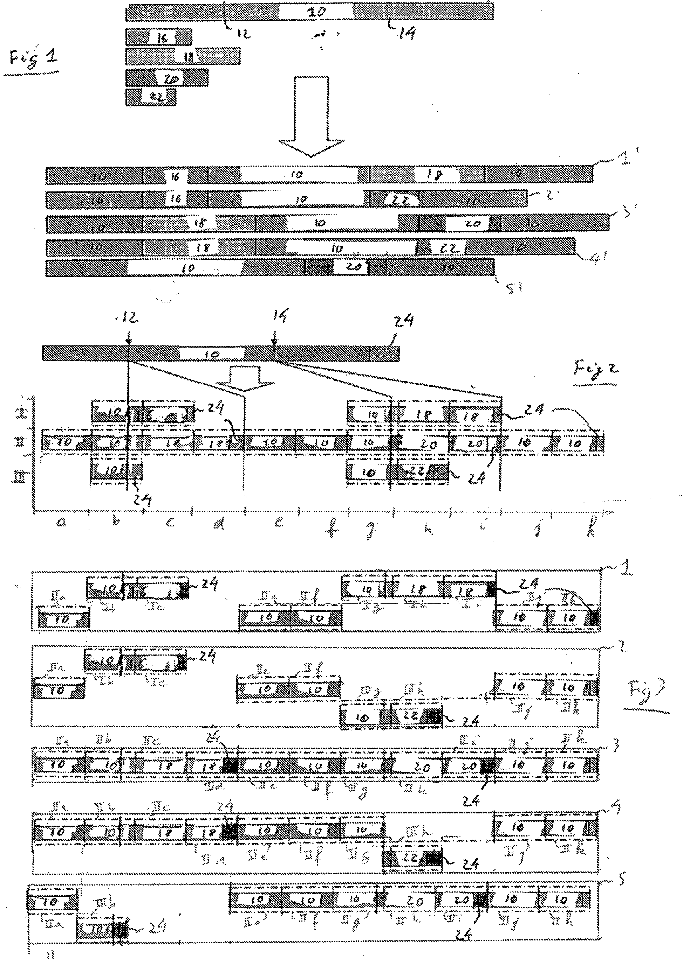

In reference to figure 1 is represented a common content 10, formed by primary data, intended to form 5 multimedia files, by different introductions of specific content 16, 18, 20 and/or 22 in insertion zones 12 and 14 of this common content.

More specifically, these 5 multimedia files must be generated as indicated below:
- The first file: 10 + 16 (zone 1) + 18 (zone 2)
- The second file: 10 + 16 (zone 1) + 22 (zone 2)
- The third file: 10 + 18 (zone 1) + 20 (zone 2)
- The fourth file: 10 + 18 (zone 1) + 22 (zone 2)
- The fifth file: 10 + 20 (zone 2)

In this example, these insertion zones 12 and 14 are selected by an operator in order to be acceptable and/or pertinent with respect to the video content of the common file 10. Thus, the operator can avoid interrupting a dialogue or an action scene with an advertisement.

When the specific contents 16, 18, 20 and/or 22 are inserted in the common file 10, the represented intermediary files 1', 2', 3', 4' or 5' are generated.

These intermediary files 1', 2', 3', 4' or 5' have variable lengths such that their decomposition into packets of the same size generates numerous packets specific to each of the files, thus limiting the interest of a transmission via a peer-to-peer network as previously noted.

For this reason, a software tool is implemented to introduce filling data into the insertion zones 12 or 14 such that a limit of each of these insertion zones 12 and 14 corresponds to a limit between two distinct transmission packets.

Such an implementation generates more than one common and/or specific packets as identified in figure 2 by an ordinate - I, II or III - and an abscissa - a, b, c, ...j or k, - the various sought multimedia files being able to be formed from these common and/or specific packets as shown in figure 3.

In this example, the considered limit of insertion zones 12 and 14 is the limit situated downstream with respect to the file reading direction - or reproduction direction, this direction being represented by an arrow in figure 2.

Thus, the primary data situated downstream of an insertion zone can be transmitted by common packets - IIe and IIf for zone 12, IIj, Ilk for zone 14 - while all of the secondary or filling data - situated in an insertion zone can be transmitted by specific packets - Ic, IIc, IId for zone 12, Ih, Ii, IIh, Iii, IIIh for zone 14.

In addition, the primary data situated at the upstream limit of an insertion zone can also be transmitted in a common packet considering, for example, that the packet transmitting these primary data is completed by filling data.

However, in this embodiment, these primary data situated upstream of an insertion zone form a specific packet - Ib, IIb or IIIb for zone 12, Ig, IIg or IIIg for zone 14 - for each multimedia file forming a packet with secondary data of a specific content, which enables limiting the quantity of filling data used by the method.

Indeed, the software tool can take into consideration numerous approaches and numerous parameters to insert filling data such as, without limitation, the location of insertion zones 12 or 14, the imposed size of packets and the sizes of intermediary files 1', 2', 3', 4' or 5'.

It should be noted that, when the multimedia files have identical specific contents, the software tool can also produce packets of secondary data common to these files, such as the packets Ib and Ic (files 1 and 2).

As shown in figure 3, the 5 multimedia files 1, 2, 3, 4 and 5 generated have numerous common packets, both for the set of these multimedia files such as the packets IIa, IIe, IIf and Ilk, as for a limited number of these files such as the packets Ib and Ic common to the files 1 and 2.

More specifically, noting CMi as the Content Map of file i, this latter is then composed of:
File 1: CM1 = {IIa, Ib, Ic, IIe, IIf, Ig, Ih, Ii, IIj, IIk}
File 2: CM2 = {IIa, Ib, Ic, IIe, IIf, IIIg, IIIh, IIj, IIk}
File 3: CM3 = {IIa, IIb, IIc, IId, IIe, IIf, IIg, IIh, IIi, IIj, IIk}
File 4: CM4 = {IIa, IIb, IIc, IId, IIe, IIf, IIg, IIIh, IIj, IIk}
File 5: CM5 = {IIa, IIIb, IIe, IIf, IIg, IIh, Iii, IIj, IIk}

In accordance with the operation of peer-to-peer networks previously described, to each multimedia file is associated a list of packets or a "content map" that enables this file to be generated.

However, the invention enabling the implementation of common packets, a first multimedia file generated according to the invention should also be associated with a list of packets identifying at least a second multimedia file having common packets with this first multimedia file.

Thus, a peer wanting to obtain common packets could require these latter from peers storing another multimedia file that nevertheless has these common packets.

The present invention is susceptible to numerous variants. Notably of numerous parameters/approaches that can be taken into account to introduce the filling data into the insertion zones, such as for example the parameters linked to the hardware or software constraints specific to the peer-to-peer network.

For example, the example described above used an implicit filling data location rule such that, in a packet, these filling data are situated at the end of the packet. However it should be noted that the filling data can be freely located in the insertion zone.

Moreover, in the example described above, the specific data can be attached to the primary data in a same packet. This corresponds for example to the packet Ib of figure 2, that contains the primary data 10 and a part of the specific data 16. The separation of these data can be rendered voluntarily complicated, so that these data must be read together. Thus if the specific data 16 corresponds to advertising, the primary data 10 can only be read with this advertising. Alternatively, these data can be linked in such a way that they can be read independently of one another.

In any case, in the metadata associated with a packet, the quantity of filling data and their location, for example at the start or the end of a packet, should be indicated.

## Claims

1. Method for generating multimedia files (1, 2, 3, 4 5) intended to be transmitted via a peer-to-peer network by transmission packets of the same size, each of these multimedia files (1, 2, 3, 4, 5) being obtained from an intermediary file (1', 2', 3', 4', 5') comprising:
- a content common (10) to all the intermediary files (1', 2', 3', 4', 5') formed by primary data, and
- a content specific (16, 18, 20, 22) to each intermediary file (1', 2', 3', 4', 5'), formed by secondary data introduced into an insertion zone (12, 14) delimited by primary data of said common content (10),
**characterized in that** these multimedia files (1, 2, 3, 4, 5) are generated by introducing filling data (24) into the insertion zones (12, 14) of said intermediary files (1', 2', 3', 4', 5') such that a limit of these insertion zones corresponds to a limit between two distinct transmission packets.

2. Method according to claim 1 **characterized in that** the filling data (24) are introduced between the secondary data of a specific content (16, 18, 20, 22) and the limit of insertion zones corresponding to a limit between two distinct packets.

3. Method according to claim 1 or 2 **characterized in that** the filling data (24) are introduced according to parameters common to the intermediary files.

4. Method according to claim 3 **characterized in that** the parameters common to the intermediary files comprise at least one of the following parameters: the location of insertion zones in a common file, a predetermined size of packets to be transmitted, the sizes of intermediary files, a location rule for filling data in a packet.

5. Method according to claim 4 **characterized in that** the rule for location of filling data (24) in a packet requires the location of these filling data at the start or end of the packet.

6. Method according to claim 5 **characterized in that** the information indicating the quantity of filling data, situated at the start or end of a packet, are associated with this packet.

7. Method according to one of the preceding claims **characterized in that** a first generated multimedia file is associated with a list of contents identifying at least a second multimedia file having packets common with this first multimedia file.

8. Operator server generating multimedia files intended to be transmitted by transmission packets in a peer-to-peer network, each of these multimedia files being obtained from an intermediary file (1', 2', 3', 4', 5') comprising:
- a common content (10) formed by primary data,
- a specific content (16, 18, 20, 22) formed by secondary data introduced in an insertion zone (12, 14) situated between the primary data of said common content (10),
**characterized in that** comprises means for generating these multimedia files (1, 2, 3, 4, 5) by introducing filling data in the insertion zones of said intermediary files (1', 2', 3', 4', 5') such that a limit of these insertion zones corresponds to a limit between two distinct transmission packets according to a method in accordance with one of the preceding claims.

9. Operator server according to claim 8, **characterised in that** it comprises:
- means for receiving a request for transmission of common content, and
- means for transmitting a list of packets and a list of servers of a generated multimedia file, this multimedia file being selected according to parameters specific to the request from this client server.

10. Peer intended to receive and transmit multimedia files via a peer-to-peer network, each of these multimedia files being obtained from an intermediary file (1', 2', 3', 4', 5') comprising:
- a common content (10) formed by primary data,
- a specific content (16, 18, 20, 22) formed by secondary data introduced into an insertion zone (12, 14) situated between the primary data of common content (10),
**characterized in that** it comprises means for detecting filling data (24) inserted between the data of a multimedia file (1, 2, 3, 4, 5) according to a method in accordance with one of claims 1 to 7, and
- means for deleting these filling data (24) in order to reproduce the multimedia content of the file without considering the filling data (24).

11. Peer according to claim 10 **characterized in that** it comprises means for reinserting filling data (24) deleted before transmitting the multimedia file (1, 2, 3, 4, 5) to another peer.

12. Multimedia files (1, 2, 3, 4, 5) intended to be transmitted by packets in a peer-to-peer network, each of these multimedia files being obtained from an intermediary file (1', 2', 3', 4', 5') comprising:
- a common content (10) formed by primary data,
- a specific content (16, 18, 20, 22) formed by secondary data introduced into an insertion zone (12, 14) situated between the primary data of common content (10),
**characterized in that** they comprise filling data in their insertion zones (12, 14) such that a limit of these insertion zones corresponds to a limit between two distinct transmission packets in accordance with one of claims 1 to 7.

## Patentansprüche

1. Verfahren zum Erzeugen von Multimediadateien (1, 2, 3, 4, 5), die durch Übertragungspakete derselben Größe über ein Peer-to-Peer-Netz übertragen werden sollen, wobei jede dieser Multimediadateien (1, 2, 3, 4, 5) aus einer Zwischendatei (1', 2', 3', 4', 5') erhalten wird, die umfasst:
- einen für alle Zwischendateien (1', 2', 3', 4', 5') gemeinsamen Inhalt (10), der durch Primärdaten gebildet ist, und
- einen für jede Zwischendatei (1', 2', 3', 4', 5') spezifischen Inhalt (16, 18, 20, 22), der durch Sekundärdaten gebildet ist, die in eine durch Primärdaten mit dem gemeinsamen Inhalt (10) begrenzte Einfügezone (12, 14) eingeführt sind,
**dadurch gekennzeichnet, dass** diese Multimediadateien (1, 2, 3, 4, 5) durch Einführen von Fülldaten (24) in die Einfügezonen (12, 14) der Zwischendateien (1', 2', 3', 4', 5') in der Weise erzeugt werden, dass eine Grenze dieser Einfügezonen einer Grenze zwischen zwei unterschiedlichen Übertragungspaketen entspricht.

2. Verfahren nach Anspruch 1, **dadurch gekennzeichnet, dass** die Fülldaten (24) zwischen den Sekundärdaten mit einem spezifischen Inhalt (16, 18, 20, 22) eingeführt werden und dass die Grenze der Einfügezonen einer Grenze zwischen zwei unterschiedlichen Paketen entspricht.

3. Verfahren nach Anspruch 1 oder 2, **dadurch gekennzeichnet, dass** die Fülldaten (24) in Übereinstimmung mit Parametern eingeführt werden, die für die Zwischendateien gemeinsam sind.

4. Verfahren nach Anspruch 3, **dadurch gekennzeichnet, dass** die Parameter, die für die Zwischendateien gemeinsam sind, mindestens einen der folgenden Parameter umfassen: die Lage der Einfügezonen in einer gemeinsamen Datei, eine vorgegebene Größe zu übertragender Pakete, die Größe von Zwischendateien, eine Lagevorschrift zum Füllen von Daten in ein Paket.

5. Verfahren nach Anspruch 4, **dadurch gekennzeichnet, dass** die Vorschrift für die Lage zum Füllen von Daten (24) in ein Paket die Lage dieser Fülldaten zu Beginn oder am Ende des Pakets erfordert.

6. Verfahren nach Anspruch 5, **dadurch gekennzeichnet, dass** die Informationen, die die Menge der Fülldaten angeben, die sich zu Beginn oder am Ende eines Pakets befinden, mit diesem Paket im Zusammenhang stehen.

7. Verfahren nach einem der vorhergehenden Ansprüche, **dadurch gekennzeichnet, dass** eine erste erzeugte Multimediadatei mit einer Liste von Inhalten im Zusammenhang steht, die mindestens eine zweite Multimediadatei identifiziert, die Pakete aufweist, die gemeinsam mit dieser ersten Multimediadatei sind.

8. Betreiberserver, der Multimediadateien erzeugt, die durch Übertragungspakete in einem Peer-to-Peer-Netz übertragen werden sollen, wobei jede dieser Multimediadateien aus einer Zwischendatei (1', 2', 3', 4', 5') erhalten wird, die umfasst:
- einen gemeinsamen Inhalt (10), der durch Primärdaten gebildet ist,
- einen spezifischen Inhalt (16, 18, 20, 22), der durch Sekundärdaten gebildet ist, die in eine Einfügezone (12, 14) eingeführt sind, die sich zwischen den Primärdaten mit dem gemeinsamen Inhalt (10) befindet, **dadurch gekennzeichnet, dass** er Mittel zum Erzeugen dieser Multimediadateien (1, 2, 3, 4, 5) durch Einfügen von Fülldaten in die Einfügezonen der Zwischendateien (1', 2', 3', 4', 5') in der Weise, dass eine Grenze dieser Einfügezonen einer Grenze zwischen zwei unterschiedlichen Übertragungspaketen entspricht, in Übereinstimmung mit einem Verfahren in Übereinstimmung mit einem der vorhergehenden Ansprüche umfasst.

9. Betreiberserver nach Anspruch 8, **dadurch gekennzeichnet, dass** er umfasst:
- Mittel zum Empfangen einer Anforderung für die Übertragung von gemeinsamem Inhalt, und
- Mittel zum Übertragen einer Liste von Paketen und einer Liste von Servern einer erzeugten Multimediadatei, wobei diese Multimediadatei in Übereinstimmung mit Parametern ausgewählt wird, die für die Anforderung von diesem Client-Server spezifisch sind.

10. Gleichrangiger Teilnehmer, der Multimediadateien über ein Peer-to-Peer-Netz empfangen und senden soll, wobei jede dieser Multimediadateien aus einer Zwischendatei (1', 2', 3', 4', 5') erhalten wird, die umfasst:
- einen gemeinsamen Inhalt (10), der durch Primärdaten gebildet ist,
- einen spezifischen Inhalt (16, 18, 20, 22), der durch Sekundärdaten gebildet ist, die in eine Einfügezone (12, 14) eingeführt sind, die sich zwischen den Primärdaten mit gemeinsamem Inhalt (10) befindet,
- **dadurch gekennzeichnet, dass** er Mittel zum Erfassen von Fülldaten (24), die in Übereinstimmung mit einem Verfahren in Übereinstimmung mit einem der Ansprüche 1 bis 7 zwischen die Daten einer Multimediadatei (1, 2, 3, 4, 5) eingeführt sind, und
- Mittel zum Löschen dieser Fülldaten (24), um den Multimediainhalt der Datei ohne Beachtung der Fülldaten (24) wiederzugeben, umfasst.

11. Gleichrangiger Teilnehmer nach Anspruch 10, **dadurch gekennzeichnet, dass** er Mittel zum Wiedereinfügen von Fülldaten (24), die vor dem Übertragen der Multimediadatei (1, 2, 3, 4, 5) an einen anderen gleichrangigen Teilnehmer gelöscht worden sind, umfasst.

12. Multimediadateien (1, 2, 3, 4, 5), die durch Pakete in einem Peer-to-Peer-Netz übertragen werden sollen, wobei jede dieser Multimediadateien aus einer Zwischendatei (1', 2', 3', 4', 5') erhalten wird, wobei die Multimediadateien umfassen:
- einen gemeinsamen Inhalt (10), der durch Primärdaten gebildet ist,
- einen spezifischen Inhalt (16, 18, 20, 22), der durch Sekundärdaten gebildet ist, die in eine Einfügezone (12, 14) eingeführt sind, die sich zwischen den Primärdaten mit gemeinsamem Inhalt (10) befindet,
- **dadurch gekennzeichnet, dass** sie Fülldaten in ihren Einfügezonen (12, 14) in der Weise umfassen, dass eine Grenze dieser Einfügezonen einer Grenze zwischen zwei unterschiedlichen Übertragungspaketen in Übereinstimmung mit einem der Ansprüche 1 bis 7 entspricht.

## Revendications

1. Procédé de génération de fichiers multimédia (1, 2, 3, 4, 5) destinés à être transmis via un réseau pair-à-pair par paquets de transmission de même taille, chacun de ces fichiers multimédia (1, 2, 3, 4, 5) étant obtenus à partir d'un fichier intermédiaire (1', 2', 3', 4', 5') comprenant :
- un contenu commun (10) à tous les fichiers intermédiaires (1', 2', 3', 4', 5'), formé par des données primaires, et
- un contenu spécifique (16, 18, 20, 22) à chaque fichier intermédiaire (1', 2', 3', 4', 5'), formé par des données secondaires introduites dans une zone d'insertion (12, 14) délimitée par des données primaires dudit contenu commun (10),
**caractérisé en ce qu'**on génère ces fichiers multimedia (1, 2, 3, 4, 5) en introduisant des données de remplissage (24) dans les zones d'insertion (12, 14) desdits fichiers intermédiaires (1', 2', 3', 4', 5') de telle sorte qu'une limite de ces zones d'insertion corresponde à une limite entre deux paquets de transmission distincts.

2. Procédé selon la revendication 1 **caractérisé en ce qu'**on introduit les données de remplissages (24) entre les données secondaires d'un contenu spécifique (16, 18, 20, 22) et la limite des zones d'insertion correspondant à une limite entre deux paquets distincts.

3. Procédé selon la revendication 1 ou 2 **caractérisé en ce qu'**on introduit les données de remplissage (24) en fonction de paramètres communs aux fichiers intermédiaires.

4. Procédé selon la revendication 3 **caractérisé en ce que** les paramètres communs aux fichiers intermédiaires comprennent au moins un des paramètres suivants : la localisation des zones d'insertion dans le fichier commun, une taille prédéterminée des paquets à transmettre, les tailles des fichiers intermédiaires, une règle de localisation des données de remplissage dans un paquet.

5. Procédé selon la revendication 4 **caractérisé en ce que** la règle de localisation des données de remplissage (24) dans un paquet requiert la localisation de ces données de remplissage en début ou en fin de paquet.

6. Procédé selon la revendication 5 **caractérisé en ce que** des informations indiquant la quantité de données de remplissage, situées en début ou en fin d'un paquet, sont associées à ce paquet.

7. Procédé selon l'une des revendications précédentes **caractérisé en ce qu'**on associe à un premier fichier multimédia généré une liste de contenus identifiant au moins un second fichier multimédia présentant des paquets communs avec ce premier fichier multimédia.

8. Serveur opérateur générant des fichiers multimédia destinés à être transmis par paquets dans un réseau pair-à-pair, chacun de ces fichiers multimédia étant obtenu à partir d'un fichier intermédiaire (1', 2', 3', 4', 5') comprenant :
- un contenu commun (10) formé par des données primaires,
- un contenu spécifique (16, 18, 20, 22) formé par des données secondaires introduites dans une zone d'insertion (12, 14) située entre des données primaires du contenu commun (10),
**caractérisé en ce qu'**il comprend des moyens pour générer ces fichiers multimedia (1, 2, 3, 4, 5) en introduisant des données de remplissage dans les zones d'insertion desdits fichiers intermédiaires (1', 2', 3', 4', 5') de telle sorte qu'une limite de ces zones d'insertion corresponde à une limite entre deux paquets de transmission distincts selon un procédé conforme à l'une des revendications précédentes.

9. Serveur opérateur selon la revendication 8 **caractérisé en ce qu'**il comprend :
- des moyens pour recevoir une requête de transmission du contenu commun, et
- des moyens pour transmettre une liste de paquets et une liste de serveurs d'un fichier multimédia généré, ce fichier multimédia étant sélectionné en fonction de paramètres propres à la requête de ce serveur client.

10. Pair destiné à recevoir et transmettre des fichiers multimédia via un réseau pair-à-pair, chacun de ces fichiers multimédia étant obtenu à partir d'un fichier intermédiaire (1', 2', 3', 4', 5') comprenant :
- un contenu commun (10) formé par des données primaires,
- un contenu spécifique (16, 18, 20, 22) formé par des données secondaires introduites dans une zone d'insertion (12, 14) située entre des données primaires du contenu commun (10),
**caractérisé en ce qu'**il comprend des moyens pour détecter des données de remplissages (24) insérées entre des données d'un fichier multimédia (1, 2, 3, 4, 5) selon un procédé conforme à l'une des revendications 1 à 7, et
- des moyens pour supprimer ces données de remplissage (24) afin de reproduire le contenu multimédia du fichier sans considérer les données de remplissage (24).

11. Pair selon la revendication 10 **caractérisé en ce qu'**il comprend des moyens pour réinsérer les données de remplissage (24) supprimées avant de transmettre le fichier multimédia (1, 2, 3, 4, 5) à un autre pair.

12. Fichiers multimédia (1, 2, 3, 4, 5) destinés à être transmis par paquets dans un réseau pair-à-pair, chacun de ces fichiers multimédia étant obtenu à partir d'un fichier intermédiaire (1', 2', 3', 4', 5') comprenant :
- un contenu commun (10) formé par des données primaires,
- un contenu spécifique (16, 18, 20, 22) formé par des données secondaires introduites dans une zone d'insertion (12, 14) située entre des données primaires du contenu commun (10),
**caractérisés en ce qu'**ils comprennent des données de remplissage dans leurs zones d'insertion (12, 14) de telle sorte qu'une limite de ces zones d'insertion corresponde à une limite entre deux paquets de transmission distincts selon un procédé conforme à l'une des revendications 1 à 7.
